# EUROPÄISCHE PATENTSCHRIFT

(11) **EP 3 876 692 B1**
(45) Veröffentlichungstag und Bekanntmachung des Hinweises auf die Patenterteilung: **23.08.2023**
(21) Anmeldenummer: 19795470.4
(22) Anmeldetag: 17.10.2019
(51) Int. Cl.: A01B 29/04

(54) **LANDWIRTSCHAFTLICHE VORRICHTUNG ZUR BODENBEARBEITUNG**
AGRICULTURAL DEVICE FOR SOIL CULTIVATION
DISPOSITIF AGRICOLE POUR LE TRAVAIL DU SOL

(30) Priorität: 08.11.2018 DE 102018127945
(43) Veröffentlichungstag der Anmeldung: 15.09.2021
(73) Patentinhaber: Kieselbach Maschinenbauteile GmbH, 59494 Soest (DE)
(72) Erfinder: ESKEN, Manfred, 59494 Soest NRW (DE)
(74) Vertreter: Schneider, Sascha
(86) Internationale Anmeldenummer: PCT/EP2019/078236
(87) Internationale Veröffentlichungsnummer: WO 2020/094358

(56) Entgegenhaltungen:
- CN-U- 205 017 787
- DE-A1- 3 317 626
- DE-A1-102009 033 408
- US-B1- 6 763 896

## Beschreibung

Die Erfindung beschreibt eine landwirtschaftliche Vorrichtung zur Bodenbearbeitung.

Landwirtschaftliche Vorrichtungen zur Bodenbearbeitung sind hinreichend aus dem Stand der Technik bekannt. Wie vorliegend weisen landwirtschaftliche Vorrichtungen zur Bodenbearbeitung mindestens eine Packerwalze zum Einebnen und/oder zur Verdichtung von Erdreich auf. Bei den Vorrichtungen des Stands der Technik besteht jedoch nachteiligerweise unter anderem das Problem, dass die Packerwalze zumindest zeitweilig den ausreichenden Kontakt zum Boden verliert und dadurch ein unerwünschter Schlupf, d.h. ein Blockieren der Packerwalze entstehen kann. Dieses unerwünschte Verhalten der Packerwalzen des Stands der Technik führen zu einer nachteiligen Verdichtung des Erdreichs und so zu negativen Auswirkungen auf den Bodenbearbeitungsvorgang. Die Dokumente DE 33 17 626 A1, DE 10 2009 033408 A1 und CN 205 017 787 U beschreiben bekannte Packerwalzen.

Es ist daher die Aufgabe der vorliegenden Erfindung, eine Vorrichtung anzugeben, die die Nachteile des Stands der Technik beseitigt und insbesondere den unerwünschten Schlupf und/oder die unerwünschte zusätzliche Verdichtung des Erdreichs verhindert.

Diese Aufgabe wird mit dem Gegenstand der unabhängigen Ansprüche gelöst. Vorteilhafte Weiterbildungen der Erfindung sind in den Unteransprüchen angegeben.

Bei angegebenen Wertebereichen sollen auch innerhalb der genannten Grenzen liegende Werte als Grenzwerte offenbart gelten und in beliebiger Kombination beanspruchbar sein.

Der Gegenstand der Erfindung betrifft eine landwirtschaftliche Vorrichtung zur Bodenbearbeitung, aufweisend mindestens eine Packerwalze zum Einebnen und/oder zur Verdichtung von Erdreich, wobei die Vorrichtung mindestens eine Antriebseinheit zum Antrieb der mindestens einen Packerwalze aufweist.

Der Gegenstand der Erfindung betrifft weiterhin ein System aus einer erfindungsgemäßen Vorrichtung zur Bodenbearbeitung und einer Transportmaschine, wie zum Beispiel ein Traktor/Zugmaschine, und/oder einer Arbeitsmaschine. Die Transportmaschine kann aber auch hinter der Vorrichtung angeordnet sein. In diesem Fall wir die Vorrichtung als sogenannter Frontpacker verwendet.

Durch den eigenen Antrieb der mindestens einen Packerwalze kann vorteilhaft ein verbessertes Andrücken des Erdreichs erfolgen, ohne dass eine unerwünschte Kompaktierung des Erdreichs erfolgen würde. Außerdem erfährt die Packerwalze einen zusätzlichen Antrieb, wodurch der Antrieb der Transportmaschine zusätzlich unterstützt wird. Es ist dadurch insbesondere möglich, vorteilhaft die Bodenbearbeitungszeit zu verlängern. Zudem lassen sich der Abgasausstoß und der Kohlendioxidausstoß durch die Antriebsunterstützung vorteilhaft reduzieren.

Zusätzlich ist durch den eigenen Antrieb der mindestens einen Packerwalze möglich, zusätzliches Gewicht durch den Antrieb und zugehörige Bauteile (wie z.B. Tragegestell und/oder Energieversorgungseinheit) auf die Packerwalze aufzubringen, sodass der ständige Kontakt der Packerwalze mit dem Erdreich verbessert gewährleistet ist.

Insbesondere kann es weiterhin möglich sein, dass durch den verbesserten Bodenkontakt auf Mitnehmer auf der Walze weitgehend verzichtet werden kann, zumindest kann die Größe der möglicherweise erforderlichen Mitnehmer weitgehend verringert werden. Hierdurch kann die nachteilige Aufwühlung des Erdreichs durch die Mitnehmer reduziert werden.

Die erfindungsgemäße Vorrichtung kann wie bereits erwähnt vorteilhaft vielseitig eingesetzt werden. So kann die Vorrichtung beispielsweise als sogenannter Frontpacker eingesetzt werden. Aber auch die Verwendung als sogenannter Rückpacker, der von einer Zugmaschine gezogen wird, ist vorteilhaft möglich. Die Verwendungsmöglichkeiten der Erfindung sind enorm.

Soweit die Vorrichtung mehrere Packerwalzen aufweist, können diese Packerwalzen nebeneinander entlang einer gemeinsamen Welle angeordnet sein. Alternativ können die Walzen zumindest teilweise versetzt zueinander angeordnet sein, wobei eine Walze in Fahrtrichtung weiter nach vorne versetzt ist und eine benachbarte Walze in Fahrtrichtung weiter nach hinten versetzt ist.

Die erfindungsgemäße Vorrichtung kann als ein eigenes Maschinenbauteil an eine Transportmaschine angebracht werden. Alternativ oder zusätzlich kann die erfindungsgemäße Vorrichtung auch in eine andere Bodenbearbeitungseinrichtung integriert werden. Hier sind die Einsatzmöglichkeiten der erfindungsgemäßen Vorrichtung vielfältig.

Zur besseren Illustrierung der Erfindung seien hier einige Arten von Packerwalzen aufgeführt, die in der erfindungsgemäßen Vorrichtung verwendet werden können. Dieses ist lediglich eine beispielhafte Aufzählung und schränkt den Gegenstand der Anmeldung nicht ein:
Gummiwalzen, Zahnpackerwalzen, Stahlwalzen, geriffelte Walzen, Walzen bestehend aus mehreren separaten Walzelementen, insbesondere Scheiben, die geriffelt gezackt oder ähnlich ausgebildet sein können usw.

Gemäß einer vorteilhaften erfindungsgemäßen Ausführungsform ist vorgesehen, dass die mindestens eine Antriebseinheit einen Elektromotor aufweist. Da Elektromotoren sich durch eine besonders gute Kraftübertragungseffizienz und eine besonders gute kompakte Bauweise auszeichnen, können diese vorteilhaft besonders gut in die erfindungsgemäße Vorrichtung integriert werden.

Als Beispiel für einen solchen Elektromotor könnte ein elektrischer Einzelradantrieb verwendet werden, der mit einem etwa 400 Volt AC-Motor ausgestattet ist. je nach Verwendung der erfindungsgemäßen Vorrichtung kann ein maximales Abtriebsmoment von 15 kNm bei einer maximalen Radlast von 50 kN verwendet werden. Dieses ist jedoch nur beispielhaft angegeben und soll die Erfindung nicht weiter einschränken. Der elektrische Antrieb kann eine integrierte Bremse aufweisen.

Gemäß einer weiteren bevorzugten Ausführungsform ist vorgesehen, dass die Vorrichtung mehrere Packerwalzen aufweist, und die einzelnen Packerwalzen jeweils eine eigene Antriebseinheit aufweisen. Vorteilhaft ist es dadurch möglich, dass jede einzelne Packerwalze individuell angetrieben werden kann, sodass für jede einzelne Packerwalze der Bodenkontakt optimal erreichbar ist.

Gemäß einer weiteren bevorzugten Ausführungsform ist vorgesehen, dass die Vorrichtung mehrere Packerwalzen aufweist, und mehrere Packerwalzen über eine gemeinsame Welle durch eine gemeinsame Antriebseinheit antreibbar sind. Durch die Verwendung einer gemeinsamen Antriebseinheit ist es vorteilhaft möglich, das Gewicht der Antriebseinheit im Vergleich zu einzeln angetriebenen Packerwalzen zu reduzieren.

Gemäß dem Gegenstand des Anspruchs 1 ist vorgesehen, dass die Vorrichtung mindestens eine Steuerungseinheit aufweist, die zur Steuerung der mindestens einen Antriebseinheit konfiguriert ist, wobei die mindestens eine Steuerungseinheit mit einer Steuerleitung, insbesondere einem Datenbus, einer Transportmaschine verbindbar ist. Durch die Verbindung der Steuerungseinheit mit der Steuerleitung, insbesondere dem Datenbus, der Transportmaschine ist es vorteilhaft möglich, dass der Bediener beziehungsweise der Fahrer der Transportmaschine die Leistung des Antriebs beziehungsweise der Antriebseinheiten einstellen kann, beziehungsweise dass in der zentralen Steuerungseinheit der Transportmaschine die Parameter für die Einstellung der Antriebseinheiten beziehungsweise der Antriebseinheit vorgegeben werden können. Dadurch ist vorteilhaft kein einzelnes Einstellen der einzelnen Antriebseinheiten erforderlich.

Gemäß einer Ausführung ist die mindestens eine Antriebseinheit zusätzlich durch ein zugehöriges mobiles Steuergerät steuerbar, welches beispielsweise durch ein Smartphone oder ähnliches in Verbindung mit einer zugehörigen

App realisiert werden kann. Es ist weiterhin offenbart, jedoch nicht beansprucht, dass die mindestens eine Antriebseinheit alternativ durch ein oben genanntes zugehöriges mobiles Steuergerät steuerbar ist.

Gemäß einer weiteren bevorzugten Ausführungsform ist vorgesehen, dass die Vorrichtung mindestens eine Energieversorgungseinrichtung, insbesondere eine Batterie, zur Energieversorgung der mindestens einen Antriebseinheit aufweist. Durch die eigene Energieversorgung der mindestens einen Antriebseinheit ist ein Zugriff auf die Energieversorgung der Transportmaschine nicht oder zumindest nicht erheblich erforderlich, sodass die Haltbarkeit beziehungsweise die Betriebsdauer der Vorrichtung erhöht werden kann. Zudem kann die Energieversorgungseinheit vorteilhaft genutzt werden, um zusätzliches Gewicht auf die Packerwalzen zu erhalten, um den Bodenkontakt zu verbessern und Schlupf zu vermindern.

Gemäß einer weiteren bevorzugten Ausführungsform ist vorgesehen, dass die Energieversorgungseinrichtung, insbesondere die Batterie, austauschbar ausgebildet ist. So kann z.B. eine entleerte Energieversorgungseinrichtung, insbesondere eine entleerte Batterie, durch eine aufgeladene Energieversorgungseinrichtung, insbesondere eine aufgeladene Batterie, ausgetauscht werden, wodurch vorteilhaft Zeit eingespart werden kann. Alternativ und/oder zusätzlich ist es selbstverständlich auch möglich, die mindestens eine Antriebseinheit an eine Bordversorgung der Transportmaschine anzuschließen. Dieses erhöht die Betriebsdauer der einzelnen Antriebseinheiten vorteilhaft.

Gemäß einer weiteren bevorzugten Ausführungsform ist vorgesehen, dass die Vorrichtung mindestens eine Lagerungseinheit zur gefederten und/oder gedämpften Lagerung der mindestens einen Energieversorgungseinheit aufweist. Durch die mindestens eine Lagerungseinheit ist es vorteilhaft möglich, Erschütterungen oder sonstige Störungen, die beim Betrieb entstehen können, aufzufangen und zu reduzieren, sodass eine Beeinträchtigung der Energieversorgung und/oder der Steuerungseinrichtung weitgehend vermieden beziehungsweise zumindest reduziert werden kann.

Gemäß einer weiteren bevorzugten Ausführungsform ist vorgesehen, die Vorrichtung ein Tragegestellt aufweist, wobei das Tragegestell derart ausgebildet ist, dass die mindestens eine Energieversorgungseinheit oberhalb der mindestens einen Packerwalze angeordnet ist und das Gewicht des Tragegestells und der mindestens einen Energieversorgungseinheit die mindestens eine Packerwalze auf das Erdreich drückt. Mit dieser Konstruktion ist es vorteilhaft möglich, dass das Gewicht des Tragegestells und/oder der Energieversorgungseinheit die Packerwalze nach unten auf den Boden drückt, sodass eine verbesserte Kontaktierung möglich ist.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in
- Figur 1:: eine erfindungsgemäße Vorrichtung in einer beispielhaften Ausführungsform mit unterschiedlichen Sorten von Packerwalzen,
- Figur 2:: eine Seitenansicht der Vorrichtung aus Figur 1,
- Figur 3:: eine perspektivische Ansicht von oben der Vorrichtung der Figur 1 und
- Figur 4:: eine andere perspektivische Ansicht der Vorrichtung aus Figur 1.

In den Figuren sind gleiche Bauteile oder Bauteile mit der gleichen Funktion mit den gleichen Bezugszeichen gekennzeichnet. Alle dargestellten Figuren sind schematische, nicht notwendigerweise maßstabsgetreue Darstellungen. Auf die komplette Darstellung der Vorrichtung mit allen Bauteilen wird absichtlich verzichtet, da sie keinen Mehrwert für die erfindungsgemäße Idee haben.

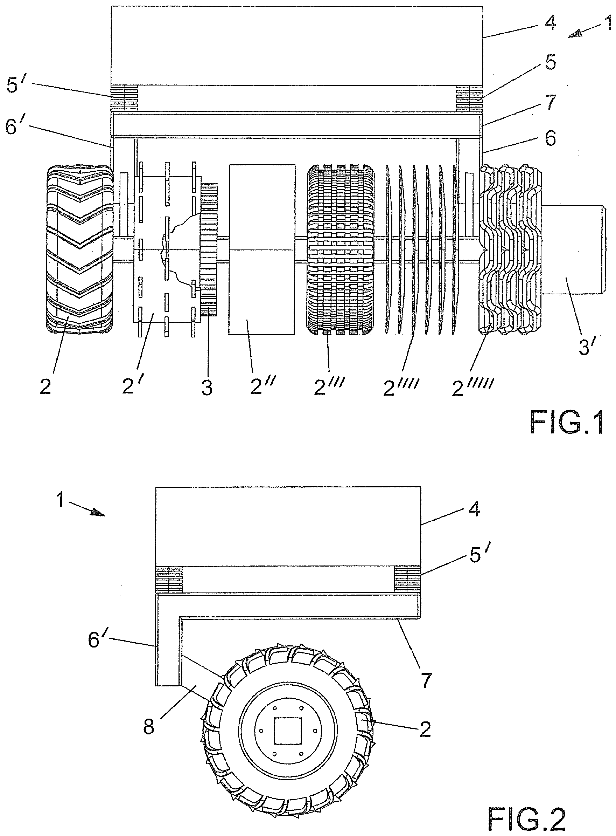

Die Figur 1 zeigt schematisch eine erfindungsgemäße Vorrichtung 1 mit mehreren Sorten von Packerwalzen, wobei sich selbstverständlich auch nur eine einzige Sorte an Packerwalzen in einer erfindungsgemäßen Vorrichtung 1 befinden können.

Die Packerwalze 2 stellt eine Gummiwalze dar, die Packerwalze 2' zeigt eine sogenannte Zahnpackerwalze, die Packerwalze 2" bezeichnet eine Stahlwalze ohne Mitnehmer, die Packerwalze 2‴ beschreibt eine geriffelte Packerwalze, die Packerwalze 2"" beschreibt eine Packerwalze mit mehreren gezackten Scheiben und die Packerwalze 2‴ʺ beschreibt eine Packerwalze mit mehreren geriffelten Scheiben.

Die Packerwalze 2' wird durch einen eigenen Antrieb 3 angetrieben. Mit der Antriebseinheit 3' wird eine Antriebseinheit dargestellt, mit der mehrere Packerwalzen, die auf einer Welle angeordnet sind, angetrieben werden können. Hierbei kann es sich insbesondere um die Packerwalzen 2", 2"', 2"" und 2‴ʺ handeln.

Die erfindungsgemäße Vorrichtung weist weiterhin eine Trageeinheit auf, die aus den Einzelträgern 6, 6', 7, 8 besteht. Auf dieser Trageeinheit sind mehrere (hier sind vier Dämpfungseinheiten dargestellt) 5, 5' auf, die zur gedämpften beziehungsweise gefederten Lagerung einer Energieversorgungseinheit 4 vorgesehen sind.

In der Seitenansicht der Figur 2, die die Vorrichtung der Figur 1 von der linken Seite zeigt, wird dargestellt, dass der Träger 8 etwa im Winkel von 45° nach oben zu einem vertikal verlaufenden Träger 6' verläuft. Der Träger 6' wiederum ist mit einem horizontalen Träger 7 verbunden beziehungsweise mit diesem zusammen ausgeformt. Der horizontale Träger 7 trägt die Energieversorgungseinheit 4, wobei zwischen dem Träger 7 und der Energieversorgungseinheit 4 Dämpfungselemente 5, 5' angeordnet sind.

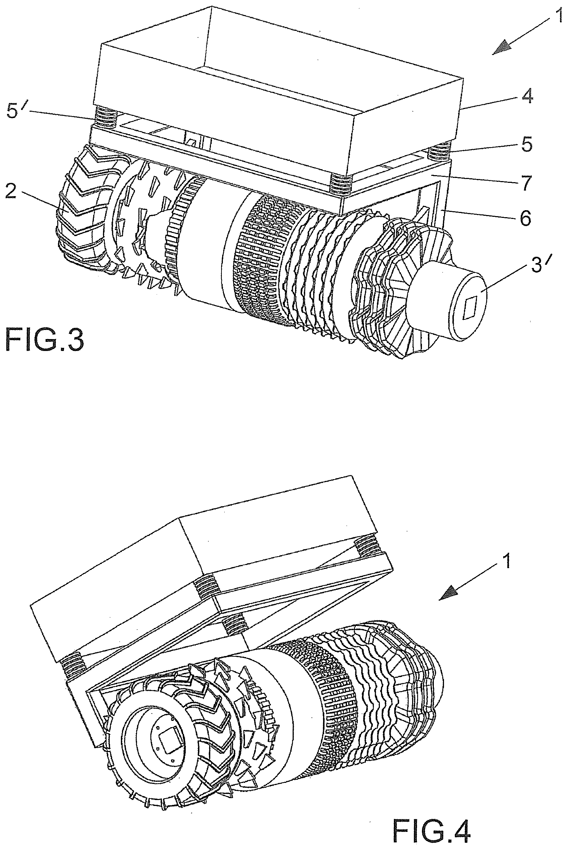

Die Figuren 3 und 4 zeigen die erfindungsgemäße Vorrichtung der Figuren 1 und 2 in perspektivischen Ansichten. Die erfindungsgemäße Vorrichtung 1 kann als separates Element an eine Transportmaschine angebracht werden. Alternativ und/oder zusätzlich kann die erfindungsgemäße Vorrichtung in andere Arbeitsmaschinen integriert werden.

### Bezugszeichenliste

- 1: Landwirtschaftliche Vorrichtung
- 2, 2', 2", 2‴, 2ʺʺ, 2‴ʺ: Packerwalze
- 3, 3': Antriebseinheit
- 4: Energieversorgungseinrichtung
- 5, 5': Lagerungseinheit
- 6, 6', 7: Tragegestell
- 8: Träger

## Patentansprüche

1. Landwirtschaftliche Vorrichtung (1) zur Bodenbearbeitung, aufweisend mindestens eine Packerwalze (2, 2', 2", 2‴, 2ʺʺ, 2‴ʺ) zum Einebnen und/oder zur Verdichtung von Erdreich, wobei die Vorrichtung (1) mindestens eine Antriebseinheit (3, 3') zum Antrieb der mindestens einen Packerwalze (2, 2', 2", 2‴, 2ʺʺ, 2‴ʺ) aufweist, wobei die Vorrichtung (1) mindestens eine Steuerungseinheit aufweist, die zur Steuerung der mindestens einen Antriebseinheit (3, 3') konfiguriert ist, **dadurch gekennzeichnet, dass** die mindestens eine Steuerungseinheit derart konfiguriert ist, dass sie mit einer Steuerleitung, insbesondere einem Datenbus, einer Transportmaschine verbindbar ist.

2. Landwirtschaftliche Vorrichtung (1), wobei die mindestens eine Antriebseinheit (3, 3') einen Elektromotor aufweist.

3. Landwirtschaftliche Vorrichtung (1) nach mindestens einem der vorhergehenden Ansprüche, wobei die Vorrichtung (1) mehrere Packerwalzen (2, 2', 2", 2‴, 2ʺʺ, 2‴ʺ) aufweist, und die einzelnen Packerwalzen (2, 2', 2", 2‴, 2ʺʺ, 2‴ʺ) jeweils eine eigene Antriebseinheit (3) aufweisen.

4. Landwirtschaftliche Vorrichtung (1) nach mindestens einem der Ansprüche 1 bis 2, wobei die Vorrichtung (1) mehrere Packerwalzen (2, 2', 2", 2‴, 2ʺʺ, 2‴ʺ) aufweist, und mehrere Packerwalzen (2, 2', 2", 2‴, 2‴′, 2‴ʺ) über eine gemeinsame Welle durch eine gemeinsame Antriebseinheit (3') antreibbar sind.

5. Landwirtschaftliche Vorrichtung (1) nach mindestens einem der vorhergehenden Ansprüche, wobei die Vorrichtung (1) mindestens eine Energieversorgungseinrichtung (4) zur Energieversorgung der mindestens einen Antriebseinheit (3, 3') aufweist.

6. Vorrichtung (1) nach Anspruch 5, wobei die Vorrichtung (1) mindestens eine Lagerungseinheit (5, 5') zur gefederten und/oder gedämpften Lagerung der mindestens einen Energieversorgungseinheit (4) aufweist.

7. Vorrichtung (1) nach mindestens einem der vorhergehenden Ansprüche, wobei die Vorrichtung (1) ein Tragegestell (6, 6', 7) aufweist, wobei das Tragegestell (6, 6', 7) derart ausgebildet ist, dass die mindestens eine Energieversorgungseinheit (4) oberhalb der mindestens einen Packerwalze (2, 2', 2", 2‴, 2ʺʺ, 2‴ʺ) angeordnet ist und das Gewicht des Tragegestells (6, 6', 7) und der mindestens einen Energieversorgungseinheit (4) die mindestens eine Packerwalze (2, 2', 2", 2‴, 2ʺʺ, 2‴ʺ) auf das Erdreich drückt.

8. System aus einer landwirtschaftlichen Vorrichtung (1) gemäß mindestens einem der vorhergehenden Ansprüche und einer Transportmaschine und/oder einer Arbeitsmaschine.

## Claims

1. Agricultural device (1) for soil cultivation, having at least one packer roller (2, 2', 2", 2‴, 2ʺʺ, 2‴ʺ) for levelling and/or compacting soil,
wherein the device (1) has at least one drive unit (3, 3') for driving the at least one packer roller (2, 2', 2", 2‴, 2‴′, 2‴ʺ), wherein the device (1) has at least one control unit which is configured to control the at least one drive unit (3, 3'), **characterized in that** the at least one control unit is configured in such a manner that it can be connected to a control line, in particular a data bus, of a transport machine.

2. Agricultural device (1), wherein the at least one drive unit (3, 3') has an electric motor.

3. Agricultural device (1) according to at least one of the preceding claims, wherein the device (1) has a plurality of packer rollers (2, 2', 2", 2‴, 2‴′, 2‴ʺ), and the individual packer rollers (2, 2', 2", 2‴, 2ʺʺ, 2‴ʺ) each have their own drive unit (3).

4. Agricultural device (1) according to at least one of Claims 1 to 2, wherein the device (1) has a plurality of packer rollers (2, 2', 2", 2‴, 2ʺʺ, 2‴ʺ), and the plurality of packer rollers (2, 2', 2", 2 ‴, 2ʺʺ, 2‴ʺ) can be driven via a common shaft by a common drive unit (3').

5. Agricultural device (1) according to at least one of the preceding claims, wherein
the device (1) has at least one energy supply device (4) for supplying energy to the at least one drive unit (3, 3').

6. Device (1) according to Claim 5, wherein the device (1) has at least one bearing unit (5, 5') for spring-loaded and/or damped mounting of the at least one energy supply unit (4).

7. Device (1) according to at least one of the preceding claims,
wherein the device (1) has a support frame (6, 6', 7), wherein the support frame (6, 6', 7) is configured in such a manner that the at least one energy supply unit (4) is arranged above the at least one packer roller (2 , 2', 2", 2‴, 2ʺʺ, 2‴ʺ) and the weight of the support frame (6, 6', 7) and the at least one energy supply unit (4) presses the at least one packer roller (2, 2', 2", 2‴, 2ʺʺ, 2‴ʺ) onto the soil.

8. System comprising an agricultural device (1) according to at least one of the preceding claims and a transport machine and/or a working machine.

## Revendications

1. Dispositif agricole (1) pour le travail du sol, comportant au moins un rouleau compacteur (2, 2', 2", 2"', 2"", 2""') pour niveler et/ou compacter le sol, sachant que le dispositif (1) comporte au moins une unité d'entraînement (3, 3') pour entraîner au moins un rouleau compacteur (2, 2', 2", 2‴, 2"", 2‴ʺ), sachant que le dispositif (1) comporte au moins une unité de commande, qui est configurée pour commander au moins une unité d'entraînement (3, 3'), **caractérisé en ce qu'**au moins une unité de commande est configurée de telle manière qu'elle peut être reliée à une ligne de commande, en particulier un bus de données, d'une machine de transport.

2. Dispositif agricole (1), sachant qu'au moins une unité d'entraînement (3, 3') comporte un moteur électrique.

3. Dispositif agricole (1) selon au moins l'une quelconque des revendications précédentes, sachant que le dispositif (1) comporte plusieurs rouleaux compacteurs (2, 2', 2", 2‴, 2"", 2""') et les rouleaux compacteurs individuels (2, 2', 2", 2‴, 2ʺʺ, 2""') comportent respectivement une unité d'entraînement propre (3).

4. Dispositif agricole (1) selon au moins l'une des revendications 1 à 2, sachant que le dispositif (1) comporte plusieurs rouleaux compacteurs (2, 2', 2", 2‴, 2ʺʺ, 2‴ʺ) et que plusieurs rouleaux compacteurs (2, 2', 2", 2‴, 2ʺʺ, 2""') peuvent être entraînés par le biais d'un arbre commun par une unité d'entraînement commune (3').

5. Dispositif agricole (1) selon au moins l'une des revendications précédentes, sachant que le dispositif (1) comporte au moins un système d'alimentation en énergie (4) pour `alimentation en énergie d'au moins une unité d'entraînement (3, 3').

6. Dispositif (1) selon la revendication 5, sachant que le dispositif (1) comporte au moins une unité de support (5, 5') pour le support suspendu sur ressorts et/ou amorti d'au moins une unité d'alimentation en énergie (4).

7. Dispositif (1) selon au moins l'une des revendications précédentes, sachant que le dispositif (1) comporte un châssis porteur (6, 6', 7), sachant que le châssis porteur (6, 6', 7) est constitué de telle manière qu'au moins une unité
d'alimentation en énergie (4) est disposée au-dessus d'au moins un rouleau compacteur (2, 2', 2", 2"', 2"", 2""') et le poids du châssis porteur (6, 6', 7) et d'au moins une unité d'alimentation en énergie (4) d'au moins un rouleau compacteur (2, 2', 2", 2‴, 2"", 2‴ʺ) appuient sur la terre.

8. Système composé d'un dispositif agricole (1) selon au moins l'une des revendications précédentes et d'une machine de transport et/ou d'une machine de travail.
